# EUROPEAN PATENT APPLICATION

(11) **EP 4 726 624 A1**
(43) Date of publication of application: **15.04.2026**
(21) Application number: 23940702.6
(22) Date of filing: 08.06.2023
(51) Int. Cl.: G06Q 10/10, F24F 11/63

(54) **AIR-CONDITIONER SELECTION SYSTEM, SERVER, INFORMATION PROCESSING TERMINAL, AND PROGRAM**

(71) Applicant: MITSUBISHI ELECTRIC CORPORATION, Chiyoda-ku Tokyo 100-8310 (JP)
(72) Inventor: ASANO Ryutaro, Tokyo 100-8310 (JP); FUKUI Tomoya, Tokyo 100-8310 (JP); HOMMA Naohiko, Tokyo 100-8310 (JP)
(74) Representative: Meissner Bolte Partnerschaft mbB
(86) International application number: PCT/JP2023/021281
(87) International publication number: WO 2024/252601

(57) **Abstract**

An air-conditioning apparatus selection system includes an input unit configured to input information required for determining an air state of an air-conditioning target space, a logical condition of air of the air-conditioning target space to be achieved by the air-conditioning apparatus, and a constraint condition to be satisfied by the air-conditioning apparatus, a storage unit configured to store information of at least one selection candidate for the air-conditioning apparatus, and a selection unit configured to select an air-conditioning apparatus satisfying the logical condition of air and the constraint condition from the at least one selection candidate for the air-conditioning apparatus stored in the storage unit based on the data input to the input unit. The information required for determining an air state of the air-conditioning target space to be inputted to the input unit includes three-dimensional information regarding the air-conditioning target space. Thus, the air-conditioning apparatus suitable for the conditions of the air-conditioning target space and the needs of the user is selected.

## Description

### Technical Field

The present invention relates to an air-conditioning apparatus selection system, a server, an information processing terminal, and a program for selecting an air-conditioning apparatus.

### Background Art

When a user buys an air-conditioning apparatus, the user usually uses the floor area of a room in which the air-conditioning apparatus is to be installed as an air-conditioning apparatus selection index to select an air-conditioning apparatus having an air-conditioning capacity corresponding to the floor area. **In** recent years, newly built houses tend to have high airtightness and high thermal insulation to keep the houses warm during winter and cold during summer. When a user living in such a house selects an air-conditioning apparatus by using only the floor area as the selection index, the air-conditioning apparatus having an excessive heating capacity in winter and an excessive cooling capacity in summer may be selected. When an over-engineered air-conditioning apparatus is used, the energy efficiency is lowered during operation of the air-conditioning apparatus not only in winter but also in other seasons. There is a problem in that, when an air-conditioning apparatus having an excessive air-conditioning capacity is used, the energy consumption is increased compared with a case where an air-conditioning apparatus having an appropriate capacity is used.

To deal with this problem, an air-conditioning apparatus selection system for a multi-sprit type air-conditioning apparatus for a building has been proposed (see, for example, Patent Literature 1). This air-conditioning apparatus selection system calculates a heat load of a space in which an air-conditioning apparatus is to be installed, refers to unique information including information on the capacity of a compressor provided in each of the multiple types of air-conditioning apparatuses, and selects an air-conditioning apparatus having a required heat load processing capacity. Patent Literature 1 indicates that, as necessary information for calculating a heat load, information on the building and a weather condition are input into the air-conditioning apparatus selection system. The information on the building includes information regarding structures, heat characteristics, and areas of the walls, windows, ceiling and floor constituting the air-conditioning target space, an insolation load and a ventilation volume of the air-conditioning target space, and an indoor temperature condition and an outdoor temperature condition.

### Citation List

### Patent Literature

Patent Literature 1: Japanese Patent No. JP 6 687 043 B2

### Summary of Invention

### Technical Problem

Although, in the air-conditioning apparatus selection system disclosed in Patent Literature 1, a heat load is calculated based on the information on the building and the weather condition, the heat characteristics, the areas, and the insolation load and the ventilation volume of the air-conditioning target space included the information on the building are parameters that can be represented simply as scalar quantities. Meanwhile, Patent Literature 1 indicates that the information on the building includes information on the structures of the walls, windows, ceiling and floor constituting the air-conditioning target space, but does not specifically indicate contents of the structures.

Regarding the information on the building, the abovementioned parameters each correspond to one-dimensional information in which the scalar quantity can be represented with a single coordinate axis. On the other hand, the parameters of the shape of the air-conditioning target space and the positions of the windows require information on direction in addition to the scaler quantities, and thus correspond to two-dimensional information or three-dimensional information. For example, when a case where the floor of an air-conditioning target space has a rectangular shape is compared with a case where the floor has a diamond shape, the flow of air blown out to the air-conditioning target space from the indoor unit of the air-conditioning apparatus is different between the cases even though the both floors have the same floor area as the scalar quantities.

To select an air-conditioning apparatus, the air-conditioning apparatus selection system disclosed in Patent Literature 1 calculates a heat load by using one-dimensional information, and does not take two- or three-dimensional information into consideration. Consequently, the air-conditioning apparatus selected by the air-conditioning apparatus selection system disclosed in Patent Literature 1 may be over-engineered or under-engineered for air-conditioning capacity. As a result, the air-conditioning apparatus cannot perform a suitable operation for the air-conditioning target space, causing a decrease in the operation efficiency and an increase in the power consumption.

The present invention has been made to solve the problem described above, and has an object to provide a system, a server, an information processing terminal, and a program for selecting an air-conditioning apparatus, each capable of selecting an air-conditioning apparatus with reduced power consumption.

### Solution to the Problem

An air-conditioning apparatus selection system according to an embodiment of the present invention is an air-conditioning apparatus selection system for selecting an air-conditioning apparatus. The air-conditioning apparatus selection system includes an input unit configured to input information required for determining an air state of an air-conditioning target space, a logical condition of air of the air-conditioning target space to be achieved by the air-conditioning apparatus, and a constraint condition to be satisfied by the air-conditioning apparatus, a storage unit configured to store information of at least one selection candidate for the air-conditioning apparatus, and a selection unit configured to select an air-conditioning apparatus satisfying the logical condition of air and the constraint condition from the at least one selection candidate for the air-conditioning apparatus stored in the storage unit based on the data input to the input unit. The information required for determining an air state of the air-conditioning target space to be input to the input unit includes three-dimensional information regarding the air-conditioning target space.

A server according to an embodiment of the present invention is a server connected to an information processing terminal via a network and configured to select an air-conditioning apparatus. The server includes a storage unit configured to store information of at least one selection candidate for the air-conditioning apparatus, and a selection unit configured to select, when information required for determining an air state of an air-conditioning target space, a logical condition of air of the air-conditioning target space to be achieved by the air-conditioning apparatus, and a constraint condition to be satisfied by the air-conditioning apparatus are received from the information processing terminal, the air-conditioning apparatus satisfying the logical condition of air and the constraint condition from the at least one selection candidate for the air-conditioning apparatus stored in the storage unit based on data received from the information processing terminal. The information required for determining an air state of the air-conditioning target space received from the information processing terminal includes three-dimensional information regarding the air-conditioning target space.

An information processing terminal according to an embodiment of the present invention is an information processing terminal connected, via a network, to a server configured to select an air-conditioning apparatus. The information processing terminal includes an input unit configured to transmit, when receiving information required for determining an air state of an air-conditioning target space, a logical condition of air of the air-conditioning target space to be achieved by the air-conditioning apparatus, and a constraint condition to be satisfied by the air-conditioning apparatus, the input data to the server, and a display unit configured to, when receiving from the server a result of selection of the air-conditioning apparatus performed by the server, display the result of selection. The information required for determining an air state of the air-conditioning target space input to the input unit includes three-dimensional information regarding the air-conditioning target space.

A program according to an embodiment of the present invention is a program to be executed by a computer configured to select an air-conditioning apparatus. The program causes the computer to execute a storage procedure for storing information of at least one selection candidate for the air-conditioning apparatus, an input procedure for inputting information required for determining an air state of an air-conditioning target space, a logical condition of air of the air-conditioning target space to be achieved by the air-conditioning apparatus, and a constraint condition to be satisfied by the air-conditioning apparatus, and a selection procedure for selecting, from the at least one selection candidate for the air-conditioning apparatus stored in the storage procedure, an air-conditioning apparatus satisfying the logical condition of air and the constraint condition based on data input in the input procedure. The information required for determining an air state of an air-conditioning target space in the input procedure includes three-dimensional information regarding the air-conditioning target space.

### Advantageous Effects of the Invention

According to an embodiment of the present invention, in the selection processing of an air-conditioning apparatus, a three-dimensional distribution of an air state in the air-conditioning target space can be obtained by adding three-dimensional information on the air-conditioning target space to the information required for determining the air state of the air-conditioning target space. Based on the obtained air state distribution, the air-conditioning apparatus that satisfies specified logical condition of air and constraint condition is selected. Compared with a case where an air-conditioning apparatus is selected based only on a heat load calculated using one-dimensional information, an air-conditioning apparatus that meticulously meets the logical condition of air of the air-conditioning target space and the constraint condition of air-conditioning apparatus is selected. As a result, an over-engineered or under-engineered air-conditioning apparatus in terms of air-conditioning capacity is prevented from being selected, and thus power consumption can be reduced.

### Brief Description of the Drawings

FIG. 1 is a block diagram illustrating a configuration example of an air-conditioning apparatus selection system according to Embodiment 1.
FIG. 2 is a schematic diagram illustrating an example of an air-conditioning target space in which an air-conditioning apparatus is installed.
FIG. 3 is a conceptual diagram illustrating an example of an interface of a first input unit shown in FIG. 1.
FIG. 4 is a conceptual diagram illustrating an example of an interface of a second input unit shown in FIG. 1.
FIG. 5 is a hardware configuration diagram illustrating a configuration example of a selection unit shown in FIG. 1.
FIG. 6 is a flowchart illustrating an operation procedure of the air-conditioning apparatus selection system according to Embodiment 1.
FIG. 7 is a block diagram illustrating a configuration example of the air-conditioning apparatus selection system according to Modification Example 1.
FIG. 8 is a block diagram illustrating a configuration example of the air-conditioning apparatus selection system according to Modification Example 2.
FIG. 9 is a block diagram illustrating a configuration example of an air-conditioning apparatus selection system according to Embodiment 2.
FIG. 10 is a flowchart illustrating an operation procedure of the air-conditioning apparatus selection system according to Embodiment 2.
FIG. 11 is a flowchart illustrating an operation procedure of an air-conditioning apparatus selection system according to Embodiment 3.
FIG. 12 is a flowchart illustrating an operation procedure of an air-conditioning apparatus selection system according to Embodiment 4.
FIG. 13 is a flowchart illustrating an operation procedure of an air-conditioning apparatus selection system according to Embodiment 5.

### Description of Embodiments

Embodiments of a system, a server, an information processing terminal, and a program for selecting an air-conditioning apparatus of the present invention will be described with reference to the drawings. In the drawings, components denoted by the same reference signs are components having the same or corresponding functions, and this applies to Embodiments 1 to 5.

### Embodiment 1

### Summary of the System

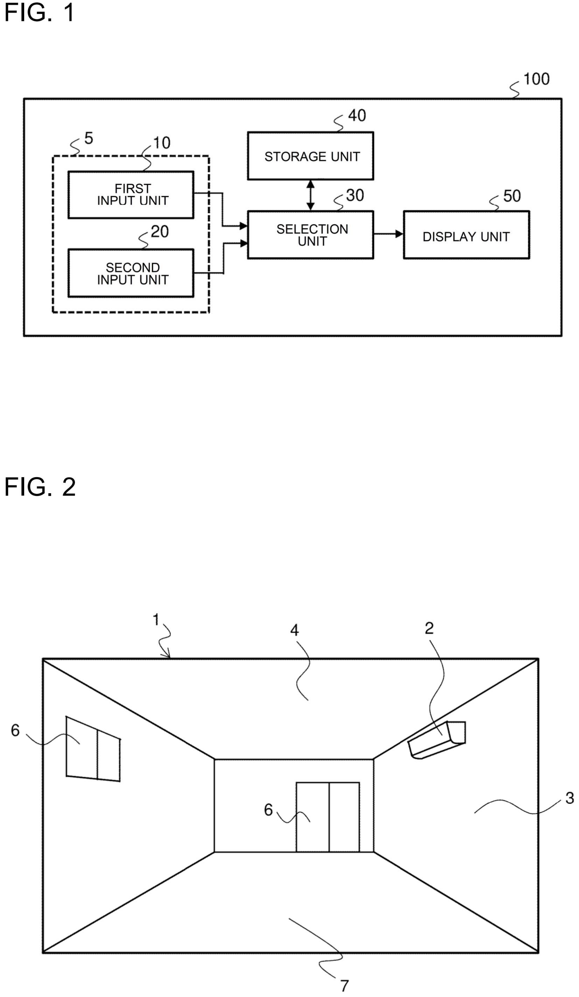

The configuration of an air-conditioning apparatus selection system according to Embodiment 1 will be described. FIG. 1 is a block diagram illustrating a configuration example of the air-conditioning apparatus selection system according to Embodiment 1. FIG. 2 is a schematic diagram illustrating an example of an air-conditioning target space in which an air-conditioning apparatus is installed.

The air-conditioning apparatus selection system 100 of Embodiment 1 is a system for selecting an air-conditioning apparatus 2 to be installed in an air-conditioning target space 1 shown in FIG. 2. The air-conditioning target space 1 shown in FIG. 2 is an example of a room in a building. When the building is an apartment complex, the air-conditioning target space 1 shown in FIG. 2 is one of the rooms in the building. When the building is a detached one-story house, the air-conditioning target space 1 shown in FIG. 2 is a main room of the building.

In FIG. 2, the building is assumed to be a general residence and the air-conditioning apparatus 2 is assumed to be a household air-conditioning apparatus. Meanwhile, when the building is a relatively large facility, an industrial air-conditioning apparatus is often used. An air-conditioning apparatus to be selected by the air-conditioning apparatus selection system 100 of the present invention is not limited to the household air-conditioning apparatus or the industrial air-conditioning apparatus. However, because the configuration of the household air-conditioning apparatus is simpler than that of the industrial air-conditioning apparatus, a description will be mainly given of a case where an air-conditioning apparatus to be selected by the air-conditioning apparatus selection system 100 is a household air-conditioning apparatus.

The air-conditioning target space 1 is a space enclosed by a ceiling 4, a floor 7, and a plurality of walls 3. A window 6 may be provided in a wall 3, as shown in FIG. 2. FIG. 2 shows an air-conditioning apparatus 2, which is virtually arranged. The air-conditioning apparatus 2 has an indoor unit and an outdoor unit, and is configured to perform air-conditioning by discharging an indoor heat absorbed by the indoor unit to the outdoors from the outdoor unit during cooling and discharging an outdoor heat absorbed by the outdoor unit into the room from the indoor unit during heating. When the air-conditioning apparatus 2 is a household air-conditioning apparatus, the indoor unit is usually installed on a wall 3 and the outdoor unit is installed outdoors.

The air-conditioning apparatus selection system 100 is used to select an air-conditioning apparatus including an indoor unit and an outdoor unit to air-condition the air-conditioning target space 1. The air-conditioning apparatus selection system 100 is mainly used by a customer who buys the air-conditioning apparatus and a person who installs or sells the air-conditioning apparatus. Hereinafter, such a person who uses the air-conditioning apparatus selection system 100 is called the "user".

The air-conditioning apparatus selection system 100 includes an input unit 5, a selection unit 30, a storage unit 40, and a display unit 50. The air-conditioning apparatus selection system 100 is, for example, a single information processing device, such as a computer. The input unit 5 includes a first input unit 10 to which the user inputs information regarding the air-conditioning target space 1, and a second input unit 20 to which the user inputs a condition requested to the air-conditioning apparatus 2.

The storage unit 40 is configured to store information of selection candidates for the air-conditioning apparatus 2. The selection unit 30 is configured to select an appropriate air-conditioning apparatus from the selection candidates for the air-conditioning apparatus 2 stored in the storage unit 40, based on the information input from the first input unit 10 and the second input unit 20. The display unit 50 is configured to output a result of the selection made by the selection unit 30 to the user. The selection result may be displayed on the display unit 50 shown in FIG. 1 or may be provided to the user as data.

### System Details

The configuration of the air-conditioning apparatus selection system 100 will be described in detail. As described above, the air-conditioning apparatus selection system 100 includes the input unit 5 including the first input unit 10 and the second input unit 20, the selection unit 30, the storage unit 40, and the display unit 50 as basic components. Each component is configured by a combination of software, including a program and data, and hardware.

The information to be input to the first input unit 10 will be described. To the first input unit 10, information about the air-conditioning target space 1 required for selecting the air-conditioning apparatus is input by the user. The information about the air-conditioning target space 1 required for selecting the air-conditioning apparatus is information required for determining an air state of the air-conditioning target space 1. The information required for determining an air state of the air-conditioning target space 1 is, for example, geometric information, thermal information, and weather information.

The geometric information includes information on the areas, heights, room layout, and window arrangement in the air-conditioning target space 1. The thermal information includes information on the insulation performance of the walls and ceiling, the airtightness, and the ventilation volume. The weather information includes information on an outdoor temperature, an insolation amount, and the direction the room faces. The geometric information, thermal information, and weather information are categorized into one-dimensional information and three-dimensional information.

The one-dimensional information is information that can be obtained as a scalar quantity, such as a room area and a ventilation volume. Part of the one-dimensional information belongs to information used in a conventional heat load computational processing or information used in selection of air-conditioning apparatus by a conventional heat load computation. On the other hand, the three-dimensional information is information that cannot be represented by a scalar quantity, such as a shape of a room, arrangement or a shape of a window. Furthermore, when each of the plurality of walls, which surround the side surfaces of the air-conditioning target space, has a different heat characteristic, information on the arrangement and the heat characteristic of each wall belongs to three-dimensional information of the space.

The air-conditioning apparatus selection system 100 of the present invention is characterized in that the abovementioned three-dimensional information is input and is used in selection of air-conditioning apparatus. Although, as can be seen from real estate advertisements, room layout information is often represented by a floor plan as two-dimensional information, room layout information is included in three-dimensional information in the present invention. For example, when a point in the air-conditioning target space is defined by three coordinate axes of X-axis, Y-axis, and Z-axis, three-dimensional information having a Z-axis coordinate of zero (the opposite direction of gravity is positive) becomes two-dimensional information indicating the room layout.

Although there are infinite types of the geometric information, thermal information, and weather information required for determining an air state of the air-conditioning target space 1, all items of the information are not necessarily required. The minimum required information may be input to the first input unit 10. For example, even when the thermal insulation property of a wall is uncertain, the air-conditioning apparatus selection system 100 can perform at least calculation for a thermal property by setting a temporary value for the thermal insulation property of the wall based on the material of the wall when the information on the material of the wall, such as wooden construction or a reinforced concrete construction, is known.

Furthermore, even when an outdoor temperature and an insolation amount are unknown, the air-conditioning apparatus selection system 100 can perform the minimum possible calculation when the region where the building is present or the direction the building faces is known. When such necessary information is unknown, the air-conditioning apparatus selection system 100 can perform calculation by using a temporary value or a typical value in place of the unknown information based on the input information. However, the less the information provided, the less the accuracy of determination of an air state of the room. When more information is input to the first input unit 10, the air-conditioning apparatus selection system 100 can perform selection processing more accurately and precisely. Meanwhile, even when information input to the first input unit 10 is not sufficient, the air-conditioning apparatus selection system 100 can perform the minimum possible selection processing although with less accuracy.

Among these information items, the one-dimensional information items particularly desired to be input to the first input unit 10 for effectively operating the air-conditioning apparatus selection system 100 are the volume of the air-conditioning target space 1, a heat characteristic of each wall, a heat characteristic of glass of each window, a ventilation volume, and the temperature and humidity of an outdoor air. The three-dimensional information items particularly desired to be input to the first input unit 10 are three-dimensional shape data of the air-conditioning target space 1, the direction of each wall of the air-conditioning target space 1, the position and shape of each window, the position of a heating element in the air-conditioning target space 1, and the heating amount of the heating element.

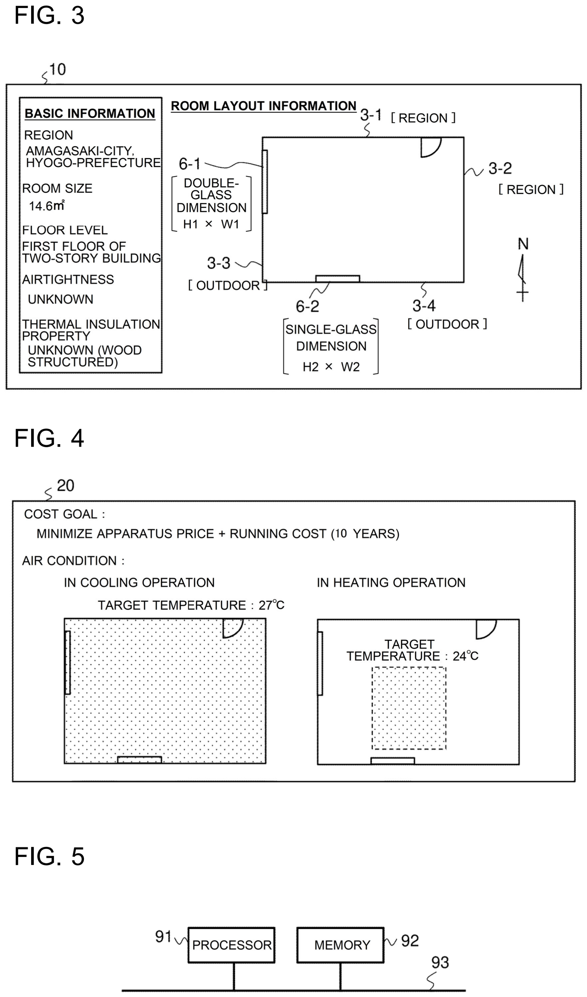

FIG. 3 is a conceptual diagram illustrating an example of an interface of the first input unit shown in FIG. 1. For example, a case is considered where the display unit 50 displays the image shown in FIG. 3 and, while looking at the image displayed on the display unit 50, the user operates an input device (not shown), such as a keyboard or mouse, to input information of each item. The example of the interface image shown in FIG. 3 indicates that there are input fields for inputting one-dimensional information, such as the region and room area, as the "basic information" and two-dimensional information, such as the shape of the room and the positions of the windows, as the "room layout information." The image of the interface shown in FIG. 3 illustrates an example of the input information. It is necessary to design an appropriate interface in accordance with the input information required by the air-conditioning apparatus selection system 100 and an attribute of the user.

The room layout information shown in FIG. 3 indicates that a window 6-1 is a double glass window and has a dimension of H1 × W1. In addition, the room layout information indicates that a window 6-2 is a single glass window and has a dimension of H2 × W2. The room layout information indicates that walls 3-1 and 3-2 face the indoor side and walls 3-3 and 3-4 face the outdoor side.

The information to be input to the second input unit 20 will be described. To the second input unit 20, an air-conditioning goal to be achieved by the air-conditioning apparatus is inputted by the user. The air-conditioning goal includes a logical condition of air of the air-conditioning target space 1 that the user wants the air-conditioning apparatus to achieve, and a constraint condition that the air-conditioning apparatus needs to satisfy.

The logical condition of air is a condition for a physical quantity representing an air state of the air-conditioning target space 1. Hereinafter, a condition for a physical quantity representing an air state of the air-conditioning target space 1 is referred to as an "air goal." It is preferable that air-conditioning goal include one or more air goals. The air goal is, for example, a temperature or a wind speed at a certain position in the air-conditioning target space 1. Furthermore, the air goal may be a temperature distribution or a space average temperature in a specific area of the air-conditioning target space 1. The temperature at a specific position and the air distribution in a specific area each may be an average value in a predetermined period time.

The constraint condition that the air-conditioning apparatus needs to satisfy includes at least one of a condition of the installation position of the air-conditioning apparatus, a condition regarding a financial cost, such as the price of the air-conditioning apparatus itself, and a condition regarding power consumption consumed by the air-conditioning apparatus while performing air-conditioning. **In** addition, the constraint condition to be satisfied by the air-conditioning apparatus may include a condition regarding availability of a particular function, such as a function for automatically cleaning inside the indoor unit, or a condition regarding a specification other than the air-conditioning capacity, such as a noise.

The condition regarding power consumed by the air-conditioning apparatus when performing air-conditioning may be included in the condition regarding a financial cost because the condition regarding power consumption relates to a running cost. The constraint condition that the air-conditioning apparatus needs to satisfy may be provided by using a specific value, such as the condition regarding a financial cost may be given as "the price of the apparatus is less than 200,000 yen" or the condition regarding a noise may be given as "a noise level is 40 dB or lower," or a condition regarding power consumption may be provided by giving the direction of selection, such as "the power consumption is minimum."

By including these conditions in the air-conditioning goal, a more suitable air-conditioning apparatus meeting the needs of the user can be selected, and the selection of the air-conditioning apparatus can be made while considering trade-offs between the cost and the air goal.

To more effectively operate the air-conditioning apparatus selection system 100 of the present invention, it is preferable that the air-conditioning goal to be input to the second input unit 20 include at least an air goal, a condition regarding power consumption consumed by the air-conditioning apparatus, and a condition regarding an installation position. By including these conditions in the air-conditioning goal, an air-conditioning apparatus achieving the air goal with less power consumption and the installation position for the apparatus can be selected.

FIG. 4 is a conceptual diagram illustrating an example of an interface of the second input unit shown in FIG. 1. A case is considered where the display unit 50 displays the image shown in FIG. 4 and, while looking at the image displayed on the display unit 50, the user operates an input device (not shown), such as a keyboard or mouse, to input information of each item. The example of the interface image shown in FIG. 4 indicates that a cost goal, an air goal for a cooling operation, and an air goal for a heating operation are specified. The cost goal is to minimize a total running cost for a product lifetime of 10 years. The air goal for a cooling operation is set as the average temperature of the entire room. The air goal for a heating operation is set as the average temperature of a specified area of the room.

The configuration of the storage unit 40 will be described. The storage unit 40 is, for example, a hard disk drive (HDD) or a solid state drive (SSD). The storage unit 40 is configured to store information required for selecting the air-conditioning apparatus. The information required for selecting the air-conditioning apparatus includes, for example, information on specifications and prices of all air-conditioning apparatuses as selection candidates. The storage unit 40 does not necessarily store all required information all the time. In a case where the air-conditioning apparatus selection system 100 is configured to connect to a network (not shown), such as the Internet, when the storage unit 40 does not store required information, the required information may be obtained via the network from a catalog, which is opened to the public on a website. Furthermore, when the required information is not found in a catalog on a website, the storage unit 40 may obtain information similar to the required information from a catalog opening to the public on a website, and may use the similar information in place of the required information.

The configuration of the selection unit 30 will be described. The selection unit 30 is configured to perform a computation operation for selecting the air-conditioning apparatus. The selection unit 30 is configured to perform a computation operation required for selecting the air-conditioning apparatus by using data input to the first input unit 10 and the second input unit 20, and select an optimum air-conditioning apparatus based on the information of the selection candidates for the air-conditioning apparatus obtained from the storage unit 40. **In** a case where the average temperature at a specified position is input to the second input unit 20 as an air goal, and minimization of power consumption and the wall area in which the air-conditioning apparatus can be installed are input to the second input unit 20 as constraint conditions, the optimum air-conditioning apparatus indicates, for example, the model of the air-conditioning apparatus capable of achieving the air-conditioning goal with the minimum power consumption in the space having characteristics input to the first input unit 10, and its installation position.

The selection unit 30 is configured to obtain an air state in the air-conditioning target space 1 in a form of three-dimensional distribution according to the characteristics based on the one-dimensional information and the three-dimensional information of the air-conditioning target space 1. Then, a selection unit 33 is configured to select the air-conditioning apparatus that satisfies the specified logical condition of air of the air-conditioning target space 1 and the specified constraint conditions of the air-conditioning apparatus based on the obtained air state distribution. For example, the selection unit 30 is configured to determine an air-conditioning output required for air-conditioning the air-conditioning target space 1 based on the obtained air state distribution, and determine the model of the air-conditioning apparatus that can achieve the air-conditioning output with a minimum required power consumption and the position to be installed.

The optimum air-conditioning apparatus selected by the selection unit 30 is not necessarily narrowed down to a single model. The selection unit 30 may be configured to select a plurality of candidates for the optimum air-conditioning apparatus and display a list of the candidates on the display unit 50. Hereinafter, a single candidate or each of a plurality of candidates for the air-conditioning apparatus selected by the selection unit 30 is referred to as an optimum air-conditioning apparatus. **In** particular, in a case where there are a plurality of conditions, as the air-conditioning goal, regarding air-conditioning capacity and financial cost, which are in a trade-off relationship, when a plurality of candidates selected by the selection unit 30 are displayed on the display unit 50, the user can select an air-conditioning apparatus that meets the needs better from among the plurality of candidates.

The configuration of the display unit 50 will be described. The display unit 50 is, for example, a liquid crystal display. The display unit 50 is configured to display information regarding the optimum air-conditioning apparatus selected by the selection unit 30. **In** addition to the information on the model of the air-conditioning apparatus, the information of the air-conditioning apparatus includes information on the appearance, the specifications, and the price of the air-conditioning apparatus. Furthermore, the display unit 50 may be configured to display information that becomes a basis of the selection, such as a logical condition of air to be achieved by the air-conditioning apparatus.

Although, in Embodiment 1, a case will be described where a selection result made by the selection unit 30 is output on the display unit 50 so that the user can visually recognize the result, it is not necessarily required to visually output information of the selection result. For example, information of the selected air-conditioning apparatus may be provided as data to an information processing terminal (not shown) of the user.

Here, an example of the hardware configuration of the selection unit 30 will be described. FIG. 5 is a hardware configuration diagram illustrating a configuration example of the selection unit shown in FIG. 1. The selection unit 30 shown in FIG. 1 includes a processor 91, such as a central processing unit (CPU) or a similar device, and a memory 92, as shown in FIG. 5. A function of the selection unit 30 is achieved by the processor 91 and the memory 92. FIG. 5 indicates that the processor 91 and the memory 92 are connected to each other via a bus 93 so that the processor 91 and the memory 92 can communicate with each other.

When a function of the selection unit 30 is achieved by software, the function of the selection unit 30 is achieved by software, firmware, or a combination of software and firmware. The software or the firmware is described as a program and is stored in the memory 92. The processor 91 is configured to read out and execute the program stored in the memory 92, to thereby achieve the function of the selection unit 30.

The program to be executed by the processor 91 is not required to be stored in the memory 92 in advance, but may be provided to an information processing device (not shown) of the user from an information processing device (not shown), such as a server, via a network (not shown). The program to be executed by the processor 91 may be provided to the user as dedicated software in a form of packaged software.

As the memory 92, a read only memory (ROM), a flash memory, an erasable and programmable ROM (EPROM), an electrically erasable and programmable ROM (EEPROM), or other types of non-volatile semiconductor memories can be used, for example. Further, as the memory 92, a volatile semiconductor memory, such as a random access memory (RAM), may be used. Furthermore, as the memory 92, a removable recording medium, such as a magnetic disk, a flexible disk, an optical disc, a compact disc (CD), a mini disc (MD), or a digital versatile disc (DVD), may be used.

### Operation of System

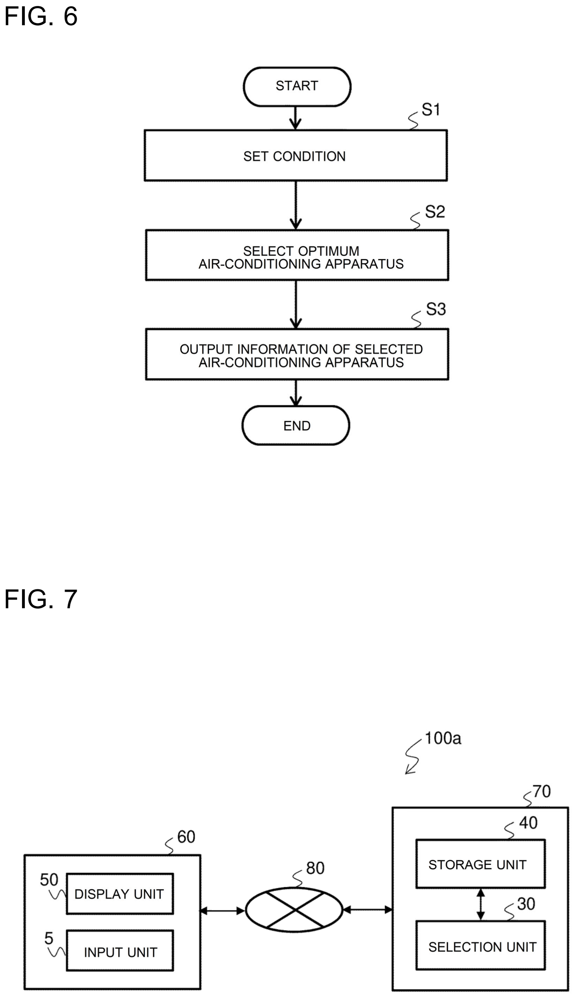

The operation of the air-conditioning apparatus selection system 100 of Embodiment 1 will be described. FIG. 6 is a flowchart illustrating an operation procedure of the air-conditioning apparatus selection system 100 according to Embodiment 1.

The user inputs, to the first input unit 10, information required for determining an air state of the air-conditioning target space 1 and inputs, to the second input unit 20, a logical condition of air of the air-conditioning target space 1 to be achieved by the air-conditioning apparatus and a constraint condition that the air-conditioning apparatus needs to satisfy. The user includes three-dimensional information regarding the air-conditioning target space 1 in the information required for determining an air state of the air-conditioning target space 1. The conditions required for selecting the air-conditioning apparatus are set in the air-conditioning apparatus selection system 100 (step S1). In step S2, the selection unit 30 selects an air-conditioning apparatus that satisfies the logical condition of air and the constraint condition from the selection candidates for the air-conditioning apparatus stored in the storage unit 40 based on the data input from the input unit 5. In step S3, the display unit 50 outputs information of the air-conditioning apparatus selected by the selection unit 30.

As described above, based on the input information including three-dimensional information, an optimum air-conditioning apparatus that meets preference of the user and satisfies the logical condition of air of the air-conditioning target space 1 and the constraint condition of air-conditioning apparatus is selected.

Note that, the configuration of the air-conditioning apparatus selection system 100 is not limited to the configuration having a single information processing device. The air-conditioning apparatus selection system 100 may be configured so that functions of the air-conditioning apparatus selection system 100 are shared and executed by multiple information processing devices and the air-conditioning apparatus selection system 100 is achieved by the multiple information processing devices. Modification examples of the configuration of the air-conditioning apparatus selection system 100 will be described below.

### Modification Example 1

FIG. 7 is a block diagram illustrating a configuration example of an air-conditioning apparatus selection system according to Modification Example 1. An air-conditioning apparatus selection system 100a includes an information processing terminal 60 and a server 70 to which the information processing terminal 60 is connected via a network 80. The network 80 is, for example, a Local Arera Network (LAN). The network 80 may be the Internet. The information processing terminal 60 includes the input unit 5 and the display unit 50. The server 70 includes the selection unit 30 and the storage unit 40.

The operation of the air-conditioning apparatus selection system 100a of Modification Example 1 will be briefly described. The user operates the information processing terminal 60 to input, to the input unit 5, information required for determining an air state of an air-conditioning target space, a logical condition of air of the air-conditioning target space to be achieved by an air-conditioning apparatus, and a constraint condition that the air-conditioning apparatus needs to satisfy. The input unit 5 is configured to transmit the data input by the user to the server 70 via the network 80. The selection unit 30 of the server 70 is configured to, when receiving the data from the information processing terminal 60, select, from among the selection candidates for the air-conditioning apparatus stored in the storage unit 40, an air-conditioning apparatus that satisfies the logical condition of air and the constraint condition based on the received data. The selection unit 30 is configured to transmit information of the selected air-conditioning apparatus to the information processing terminal 60 via the network 80. The display unit 50 of the information processing terminal 60 is configured to, when receiving the information of the selected air-conditioning apparatus from the server 70, display the received information.

Also in Modification Example 1, a similar effect to that of the air-conditioning apparatus selection system 100 shown in FIG. 1 can be obtained. Note that, although FIG. 7 indicates a case where a single information processing terminal 60 is connected to the network 80, a plurality of information processing terminals 60 may be connected to the server 70 via the network 80.

### Modification Example 2

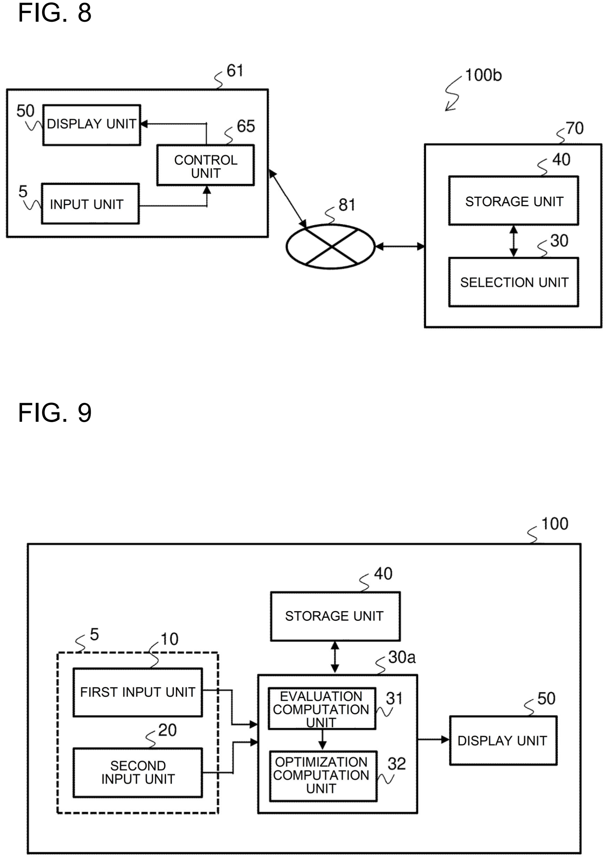

FIG. 8 is a block diagram illustrating a configuration example of an air-conditioning apparatus selection system according to Modification Example 2. An air-conditioning apparatus selection system 100b includes an information processing terminal 61 and a server 70 to which the information processing terminal 61 is connected via a network 81. The network 81 is, for example, the Internet. The network 81 may be a LAN.

The information processing terminal 61 includes an input unit 5, a display unit 50, and a control unit 65. As with the configuration described with reference to FIG. 5, the control unit 65 includes a memory 92 configured to store a program and a processor 91 configured to execute processing according to the program. The memory 92 is configured to store a program for web browser. The information processing terminal 61 may be a mobile terminal, such as a smartphone or a personal digital assistant (PDA), or a desktop or laptop personal computer (PC). **In** addition, in Modification Example 2, the selection unit 30 of the server 70 is configured to store a program for executing the air-conditioning apparatus selection processing described in Embodiment 1 as a web browser program.

The operation of the air-conditioning apparatus selection system 100b of Modification Example 2 will be briefly described. The user operates the input unit 5 of the information processing terminal 61 to cause the control unit 65 to execute a program for web browser. When the control unit 65 starts the program for web browser and the user inputs an instruction for accessing to the server 70, an access request signal requesting for access is transmitted to the server 70. The selection unit 30 transmits a web page displaying a format in which items required for air-conditioning apparatus selection are listed to the information processing terminal 61.

When the information processing terminal 61 receives the web page from the server 70, the control unit 65 causes the display unit 50 to display the web page. The user inputs, via the input unit 5, information required for determining an air state of the air-conditioning target space, a logical condition of air of the air-conditioning target space to be achieved by the air-conditioning apparatus, and a constraint condition that the air-conditioning apparatus needs to satisfy while looking at the items listed on the web page displayed on the display unit 50. The control unit 65 transmits the data input by the user to the server 70 via the network 81.

When receiving the data from the information processing terminal 61, the selection unit 30 of the server 70 selects an air-conditioning apparatus that satisfies the air-condition and the constraint condition based on the received data from among the selection candidates for air-conditioning apparatus stored in the storage unit 40. The selection unit 30 transmits the information of the selected air-conditioning apparatus to the information processing terminal 61 via the network 81. When receiving the information of the selected air-conditioning apparatus from the server 70, the display unit 50 of the information processing terminal 61 displays the received information.

Also in Modification Example 2, a similar effect to that of the air-conditioning apparatus selection system 100 shown in FIG. 1 can be obtained. Note that, although FIG. 8 indicates a case where a single information processing terminal 61 is connected to the network 81, a plurality of information processing terminals 61 may be connected to the server 70 via the network 81.

In addition, in Modification Examples 1 and 2, the server 70 may provide the program to be executed by the selection unit 30 to another information processing device (not shown) via the network 80 or 81. Furthermore, the program to be executed by the selection unit 30 may be stored in a portable recording medium. With the recording medium storing the program to be executed by the selection unit 30, the program may be provided to another information processing device (not shown).

The air-conditioning apparatus selection system 100 of Embodiment 1 includes the input unit 5, the storage unit 40, and the selection unit 30. The input unit 5 is configured to allow the user to input thereto information required for determining an air state of the air-conditioning target space 1, a logical condition of air of the air-conditioning target space 1 to be achieved by an air-conditioning apparatus, and a constraint condition that the air-conditioning apparatus needs to satisfy. The storage unit 40 is configured to store information on the candidates for selecting the air-conditioning apparatus.

The selection unit 30 is configured to select, from the selection candidates for the air-conditioning apparatus stored in the storage unit 40, an air-conditioning apparatus that satisfies the logical condition of air of the air-conditioning target space 1 and the constraint condition of the air-conditioning apparatus based on the data input to the input unit 5. The information required for determining an air state of the air-conditioning target space to be input to the input unit 5 includes three-dimensional information regarding the air-conditioning target space 1.

According to Embodiment 1, because the information required for determining an air state of the air-conditioning target space 1 includes three-dimensional information regarding the air-conditioning target space 1 for the processing of selecting an air-conditioning apparatus, the air state in the space can be obtained in a form of a three-dimensional distribution. Based on the obtained air state distribution, an air-conditioning apparatus that satisfies the specified logical condition of air and constraint condition is selected.

Compared with a case where an air-conditioning apparatus is selected by using only a heat load calculated based on a conventional one-dimensional information, an air-conditioning apparatus that meticulously meets the logical condition of air of the air-conditioning target space and the constraint condition of air-conditioning apparatus is selected. As a result, an over-engineered or under-engineered air-conditioning apparatus in terms of air-conditioning capacity is prevented from being selected, and thus power consumption can be reduced. **In** addition, because an air-conditioning apparatus suitable for the logical condition of air of the air-conditioning target space 1 and the constraint condition of air-conditioning apparatus is selected, a financial running cost can be reduced.

Further, in Embodiment 1, because, regarding the air-conditioning target space 1, three-dimensional information, such as the room layout, the position of a window, and a thermal characteristic of each wall, is input to the air-conditioning apparatus selection system 100, in addition to one-dimensional information, such as information on floor area and thermal insulation property used for a conventional heat load calculation, the air-conditioning apparatus selection system 100 calculates a logical condition of air other than a heat load, that is a distribution of temperature or flow velocity.

Furthermore, to the air-conditioning apparatus selection system 100, a logical condition of air to be satisfied by the air-conditioning apparatus is input. The logical condition of air is, for example, a capacity of the air-conditioning apparatus required by the user. The air-conditioning apparatus selection system 100 is configured to output the model of an optimum air-conditioning apparatus and the position to be installed based on these input information items. Thus, the user can obtain information of the air-conditioning apparatus and information on the installation position that are more meticulously matched with the air-conditioning target space 1 and the needs of the user.

**In** addition, according to Embodiment 1, because three-dimensional information and air-conditioning goal based on the comfortableness of the user including a constraint condition regarding installation position are input, the air-conditioning apparatus having an air-conditioning capacity that takes a distribution of an air state in the space into account and its installation position are selected. Thus, the air-conditioning apparatus that is more suitable for a characteristic of the space and the user's preference can be selected.

For example, in an air-conditioning target space with a room layout of a distinctive shape, when the user wants to air-condition part of the space, an air-conditioning apparatus that the air-conditioning apparatus selection system disclosed in Patent Literature 1 selects based on a heat load becomes over-engineered for the air-conditioning capacity. Meanwhile, when the user wants to air-condition the entire space, an air-conditioning apparatus that the air-conditioning apparatus selection system disclosed in Patent Literature 1 selects based on only a heat load becomes under-engineered for the air-conditioning capacity.

On the other hand, in Embodiment 1, because three-dimensional information of an air-conditioning target space is input to the air-conditioning apparatus selection system 100 as information required for determining an air state of the air-conditioning target space, a three-dimensional distribution of the air state in the space is reflected in the selection of air-conditioning apparatus. Thus, an air-conditioning apparatus having a better air-conditioning efficiency is selected for mainly air-conditioning part of the space desired by the user. As a result, power consumption can be reduced.

**In** addition, because heat load calculation in the air-conditioning apparatus selection system disclosed in Patent Literature 1 cannot take the installation position of an air-conditioning apparatus into account, there is a possibility that the capacity of the air-conditioning apparatus cannot be exhibited. On the other hand, because the installation position, as a constraint condition of air-conditioning apparatus, is input to the air-conditioning apparatus selection system 100 in Embodiment 1, an air-conditioning apparatus that meets not only the logical condition of air of the air-conditioning target space 1 but also the constraint condition of air-conditioning apparatus is selected.

Furthermore, an air-conditioning apparatus to be selected by the air-conditioning apparatus selection system disclosed in Patent Literature 1 is selected as an air-conditioning apparatus that has a capacity capable of processing a heat load of an air-conditioning target space. On the other hand, according to Embodiment 1, because an index of comfortableness according to the user's preference obtained from the logical condition of air being used is reflected, the comfortableness of the user is improved. For example, when a user prefers a higher temperature than a commonly used set temperature in cooling operation, an air-conditioning apparatus suitable for the need of the user is selected by inputting an air-conditioning goal including information of the average temperature in a specified area via the second input unit 20. **In** addition, an over-engineered air-conditioning apparatus in terms of air-conditioning capacity is prevented from being selected.

### Embodiment 2

**In** Embodiment 2, the arithmetic processing performed by the selection unit 30 based on the data input to the input unit 5 is divided into evaluation arithmetic processing and optimization arithmetic processing. **In** Embodiment 2, features different from those of Embodiment 1 will be mainly described, and detailed descriptions for the configuration and the operation similar to those of Embodiment 1 will be omitted.

The configuration of the air-conditioning apparatus selection system 100 of Embodiment 2 will be described. FIG. 9 is a block diagram illustrating a configuration example of an air-conditioning apparatus selection system according to Embodiment 2. A selection unit 30a includes an evaluation computation unit 31 and an optimization computation unit 32. The evaluation computation unit 31 is configured to calculate an air state of the air-conditioning target space 1 based on the geometric information, thermal information, and weather information input to the first input unit 10 and a state of an air-conditioning apparatus finally determined. Variables of the installation position and the air-conditioning capacity of the air-conditioning apparatus for finally determining a state of an air-conditioning apparatus are design variables. Hereinafter, such calculation is referred to as an evaluation computation.

The air state obtained by the evaluation computation unit 31 is used to create an objective function in the optimization computation unit 32. The objective function is an evaluation function for evaluating an achievement level for a goal of the current design variables. The objective function is constituted by using, in addition to the achievement level of the air state obtained by the evaluation computation unit 31, a constraint condition, such as a financial cost, and the achievement level of the air goal input to the second input unit 20.

The optimization computation unit 32 is configured to evaluate a value of the objective function and updates the design variables for optimization. The optimization computation unit 32 is configured to repeat the evaluation for a value of the objective function and the update of the design variables to determine optimum design variables. Such computation is referred to as optimization computation. As a method for optimization computation, a gradient method, a genetic algorithm, a Bayesian optimization and other various methods are available. Although there are various methods, the optimization method used in the present system is not limited to any particular one.

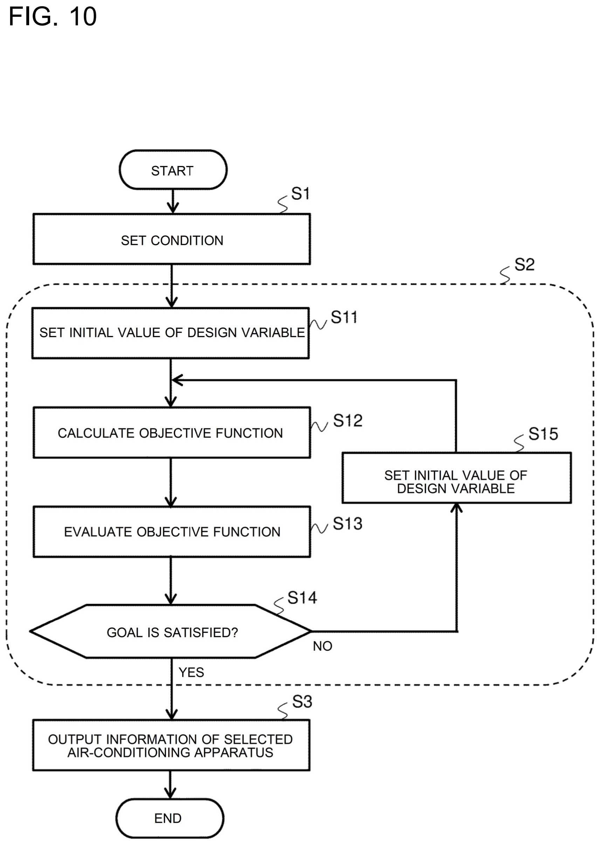

The operation of the air-conditioning apparatus selection system 100 of Embodiment 2 will be described. FIG. 10 is a flowchart illustrating an operation procedure of the air-conditioning apparatus selection system according to Embodiment 2. Because the processing of steps S1 and S3 is the same as that described with reference to FIG. 6 in Embodiment 1, the detailed descriptions will be omitted. The processing of step S2 will be described in detail.

In step S11, the evaluation computation unit 31 sets initial values of the design variables. In step S12, the evaluation computation unit 31 performs an evaluation computation based on the input conditions and the information on the design variables to calculate the objective function. In step S13, the optimization computation unit 32 evaluates the value of the objective function.

In step S14, the optimization computation unit 32 determines whether or not the goal is satisfied. When the determination result of step S14 indicates that the goal is not satisfied, the optimization computation unit 32 updates the design variables. After the processing of step S15, the selection unit 30a returns to the processing of step S12. Meanwhile, when the determination result of step S14 indicates that the goal is satisfied, the optimization computation unit 32 outputs the determination result to the display unit 50 (step S3).

According to the air-conditioning apparatus selection system 100 of Embodiment 2, by repeatedly executing the evaluation computation and the optimization computation, more suitable values for satisfying the goal are searched for the design variables and thereby an optimum air-conditioning apparatus can be selected.

### Embodiment 3

In Embodiment 3, the evaluation computation unit 31 is configured to perform the evaluation computation by using numerical calculation of computational fluid dynamics (CFD). In Embodiment 3, features different from those of Embodiment 2 will be mainly described, and detailed descriptions for the configuration and the operation similar to those of Embodiment 2 will be omitted.

As with the configuration described with reference to FIG. 9, the selection unit 30a includes the evaluation computation unit 31 and the optimization computation unit 32 in the air-conditioning apparatus selection system 100 of Embodiment 3. In the evaluation computation unit 31, CFD is used for part of the evaluation computation.

CFD is a numerical fluid analysis that numerically calculates a spatial distribution of a physical quantity regarding a logical condition of air based on a given condition. In CFD, a three-dimensional geometric shape of a space, boundary conditions, and initial conditions are required. A three-dimensional geometric shape of a space can be obtained from the geometric information input to the first input unit 10. Among the boundary conditions, heat characteristics of a wall surface and a window, and outflow and inflow of air can be obtained from thermal information input to the first input unit 10. In a steady-state calculation for obtaining a steady state in a room, an initial condition essentially does not affect a result of the calculation. Thus, as initial conditions, a steady air state and a temperature of the outdoor temperature may be selected, as appropriate.

Furthermore, in CFD, an operation of an air-conditioning apparatus needs to be modeled. As a simplest model, there is a method in which an air volume and a heat quantity according to an operation state of an air-conditioning apparatus are used as boundary conditions. Specifically, a volume of air supplied from an air-conditioning apparatus to a space per unit time and a heat supplied to the air in the space are given as boundary condition of an air outlet of the air-conditioning apparatus. Not only sensible heat observed as a change in temperature of air but also latent heat released during condensation in a cooling operation is considered.

The evaluation computation unit 31 is not necessarily required to perform all evaluation computations by CFD. For example, the evaluation computation unit 31 may be configured to calculate a heat load by using a conventional calculation method apart from the calculation of space distributions of temperature and flow velocity by CFD, and use a combination of these calculations as an evaluation computation. The optimization computation unit 32 is configured to use the result of this evaluation computation in the objective function.

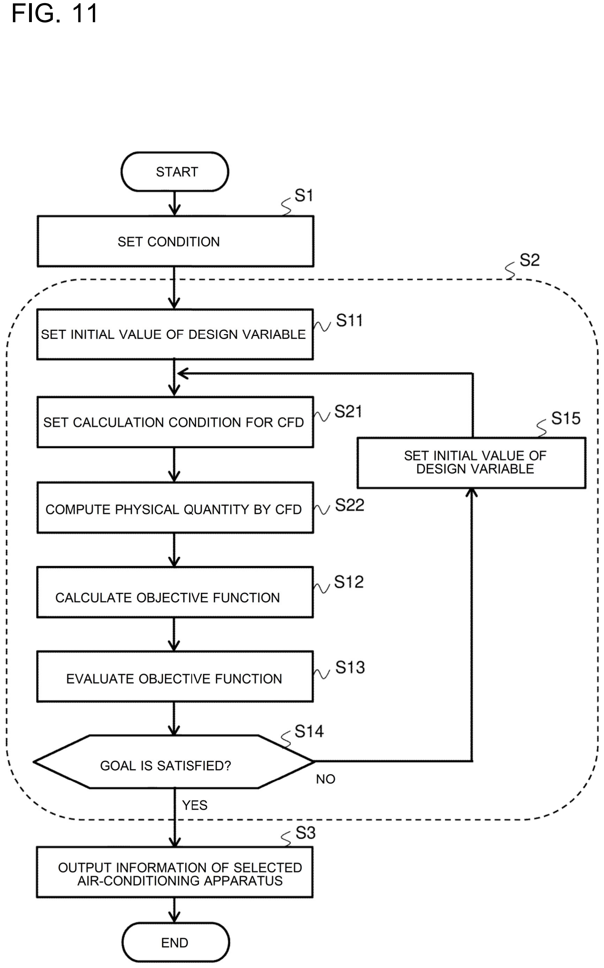

The operation of the air-conditioning apparatus selection system 100 of Embodiment 3 will be described. FIG. 11 is a flowchart illustrating an operation procedure of the air-conditioning apparatus selection system according to Embodiment 3. Because the processing of steps S1 and S3 is the same as that described with reference to FIG. 6 in Embodiment 1, the detailed descriptions will be omitted. Because the processing of steps S11 and S12 to S15 is the same as that described with reference to FIG. 10 in Embodiment 2, the detailed descriptions will be omitted.

In step S21, the evaluation computation unit 31 sets a calculation condition of CFD. In step S22, the evaluation computation unit 31 computes a physical quantity by CFD based on information of the calculation condition of CFD and the design variables to calculated the objective function.

According to the air-conditioning apparatus selection system 100 of Embodiment 3, with the numerical calculation based on a physical governing equation, a more accurate evaluation computation can be performed, and thereby accuracy in selection of air-conditioning apparatus can be improved.

### Embodiment 4

**In** Embodiment 4, processing can be performed faster than that in Embodiment 3. **In** Embodiment 4, features different from those of Embodiment 3 will be mainly described, and detailed descriptions for the configuration and the operation similar to those of Embodiment 3 will be omitted.

As with the configuration described with reference to FIG. 9, the selection unit 30a includes the evaluation computation unit 31 and the optimization computation unit 32 in the air-conditioning apparatus selection system 100 of Embodiment 4.

The CFD that the evaluation computation unit 31 uses in evaluation computation is a method for obtaining a distribution of a physical quantity in the space by repeating computation by the processor, and usually it takes time to obtain a solution. To execute a large amount of computation at a high speed, a calculator and software suitable for a high-speed computation are required. However, even with such a calculator and software suitable for a high-speed computation, there is a limit for making the speed of computation faster in reality because of cost and technical limitations.

Therefore, the evaluation computation unit 31 of Embodiment 4 is configured to perform an evaluation computation by a surrogate model using machine learning. The surrogate model is a machine learning model in which a calculation condition, such as a boundary condition or an initial condition, is used as an input, and a value of a physical quantity obtained by experiments or CFD is used as an output. The surrogate model learns from a large amount of data obtained from CFD, experiments, and observations of an actual space.

The surrogate model is constructed by applying a general method, such as a Deep Neural Network (DNN), a Convolutional Neural Network (CNN), a Generative Adversarial Network (GAN), or a diffusion model. Note that a method for constructing the surrogate model is not limited to those methods.

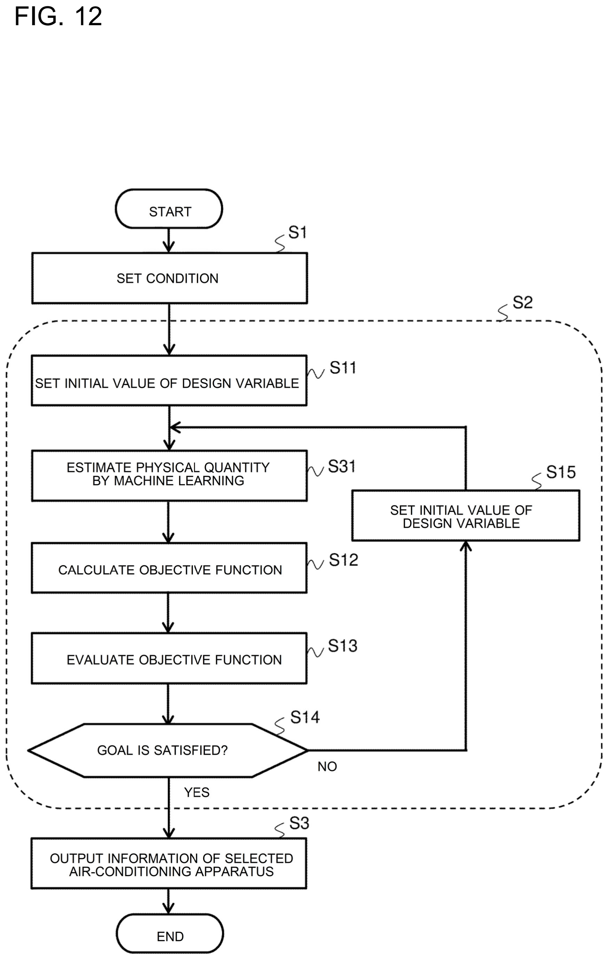

The operation of the air-conditioning apparatus selection system 100 of Embodiment 4 will be described. FIG. 12 is a flowchart illustrating an operation procedure of the air-conditioning apparatus selection system according to Embodiment 4. Because the processing of steps S1 and S3 is the same as that described with reference to FIG. 6 in Embodiment 1, the detailed descriptions will be omitted. Because the processing of steps S11 and S12 to S15 is the same as that described with reference to FIG. 10 in Embodiment 2, the detailed descriptions will be omitted.

**In** step S31, the evaluation computation unit 31 estimates a physical quantity by machine learning. Specifically, the evaluation computation unit 31 calculates the objective function by performing an evaluation computation by the surrogate model based on information of the input conditions and design variables.

According to the air-conditioning apparatus selection system 100 of Embodiment 4, by performing an evaluation computation using the surrogate model, a required computation quantity is reduced compared with CFD and thus the processing speed of the entire system can be improved. **In** addition, by using data based on experiments in learning of the surrogate model, the accuracy of the evaluation computation can be improved.

### Embodiment 5

**In** Embodiment 5, selection processing is faster than that in Embodiment 4. **In** Embodiment 5, features different from those of Embodiment 1 will be mainly described, and detailed descriptions for the configuration and the operation similar to those of Embodiment 1 will be omitted.

The configuration of the air-conditioning apparatus selection system 100 of Embodiment 5 is the same as that described with reference to FIG. 1 in Embodiment 1. **In** Embodiment 5, the selection unit 30 is configured to select an air-conditioning apparatus by using a machine learning model.

**In** Embodiment 4, the processing speed of the entire system is improved by using machine leaning in the evaluation computation unit 31 of the selection unit 30. However, the optimization computation unit 32 performs a computation that maximizes or minimizes the objective function based on the result of the evaluation computation unit 31. This optimization processing becomes a bottleneck in the processing speed of the entire system. Therefore, in Embodiment 5, machine learning is used for the entire processing of the selection unit 30 to further increase the processing speed. That is, in the selection unit 30, a machine learning model is used that outputs an optimum air-conditioning apparatus or its candidates on the display unit 50 for the information input to the first input unit 10 and the second input unit 20.

The selection unit 30 is configured to construct a machine leaning model by storing, in the storage unit 40, a data set including input information input to the first input unit 10 and the second input unit 20 and output information to be output on the display unit 50, creating a machine leaning model by using a flow similar to that of any one of FIGS. 10 to 12, and training in advance the machine learning model by using the data set.

With this feature, the selection unit 30 can select an air-conditioning apparatus that satisfies the air-conditioning goal by using the machine learning model being trained in advance. As a result, the selection unit 30 is not required to perform an evaluation computation and an optimization computation, and thus the processing speed of the entire system is improved.

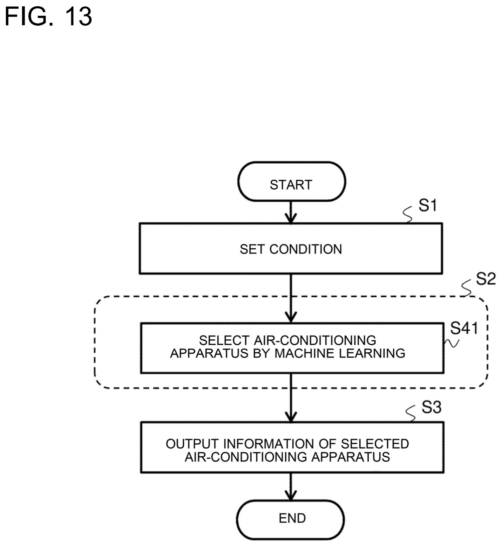

The operation of the air-conditioning apparatus selection system 100 of Embodiment 5 will be described. FIG. 13 is a flowchart illustrating an operation procedure of the air-conditioning apparatus selection system according to Embodiment 5. Because the processing of steps S1 and S3 is the same as that described with reference to FIG. 6 in Embodiment 1, the detailed descriptions will be omitted.

**In** step S41, the selection unit 30 selects, by using the machine learning model, an air-conditioning apparatus that satisfies a logical condition of air of the air-conditioning target space and a constraint condition of air-conditioning apparatus based on the input condition.

According to the air-conditioning apparatus selection system 100 of Embodiment 5, because an optimum air-conditioning apparatus can be selected without optimization computation, the processing speed of the entire system can be increased.

Note that Modification Example 1 or Modification Example 2 may be applied to any one of Embodiments 2 to 5.

### Reference Signs List

1: air-conditioning target space,
2: air-conditioning apparatus,
3, 3-1 to 3-4: wall,
4: ceiling,
5: input unit,
6, 6-1, 6-2: window,
7: floor,
10: first input unit,
20: second input unit,
30, 30a: selection unit,
31: evaluation computation unit,
32: optimization computation unit,
40: storage unit,
50: display unit,
60, 61: information processing terminal,
65: control unit,
70: server,
80, 81: network,
91: processor,
92: memory,
93: bus,
100, 100a, 100b: air-conditioning apparatus selection system

## Claims

1. An air-conditioning apparatus selection system for selecting an air-conditioning apparatus, comprising:
an input unit configured to input information required for determining an air state of an air-conditioning target space, a logical condition of air of the air-conditioning target space to be achieved by the air-conditioning apparatus, and a constraint condition to be satisfied by the air-conditioning apparatus;
a storage unit configured to store information of at least one selection candidate for the air-conditioning apparatus; and
a selection unit configured to select an air-conditioning apparatus satisfying the logical condition of air and the constraint condition from the at least one selection candidate for the air-conditioning apparatus stored in the storage unit based on the data input to the input unit,
wherein the information required for determining an air state of the air-conditioning target space to be input to the input unit includes three-dimensional information regarding the air-conditioning target space.

2. The air-conditioning apparatus selection system of claim 1, wherein
the logical condition of air includes a condition regarding a temperature at a specified position in the air-conditioning target space or a temperature distribution in a specified area.

3. The air-conditioning apparatus selection system of claim 2, wherein
the constraint condition includes at least one of a condition regarding an installation position of the air-conditioning apparatus, a condition regarding a financial cost of the air-conditioning apparatus, and a condition regarding power consumed by an air-conditioning operation performed by the air-conditioning apparatus.

4. The air-conditioning apparatus selection system of any one of claims 1 to 3, wherein
the selection unit includes
an evaluation computation unit configured to obtain the air state of the air-conditioning target space based on geometric information, thermal information, and weather information regarding the air-conditioning target space input to the first input unit as the information required for determining the air state of the air-conditioning target space, and
an optimization computation unit configured to determine the air-conditioning apparatus satisfying the logical condition of air and the constraint condition by using information regarding the air state obtained by the evaluation computation unit.

5. The air-conditioning apparatus selection system of claim 4, wherein
the evaluation computation unit is configured to use a numerical fluid analysis in part of an evaluation computation obtaining the air state of the air-conditioning target space.

6. The air-conditioning apparatus selection system of claim 4, wherein
the evaluation computation unit is configured to use a surrogate model by machine learning to obtain the air state of the air-conditioning target space.

7. The air-conditioning apparatus selection system of any one of claims 1 to 3, wherein
the selection unit is configured to use machine learning in a selection processing of the air-conditioning apparatus.

8. The air-conditioning apparatus selection system of any one of claims 1 to 7, further comprising:
a display unit configured to output a result of selection performed by the selection unit.

9. A server connected to an information processing terminal via a network and configured to select an air-conditioning apparatus, comprising:
a storage unit configured to store information of at least one selection candidate for the air-conditioning apparatus; and
a selection unit configured to select, when information required for determining an air state of an air-conditioning target space, a logical condition of air of the air-conditioning target space to be achieved by the air-conditioning apparatus, and a constraint condition to be satisfied by the air-conditioning apparatus are received from the information processing terminal, the air-conditioning apparatus satisfying the logical condition of air and the constraint condition from the at least one selection candidate for the air-conditioning apparatus stored in the storage unit based on data received from the information processing terminal,
wherein the information required for determining an air state of the air-conditioning target space received from the information processing terminal includes three-dimensional information regarding the air-conditioning target space.

10. An information processing terminal connected, via a network, to a server configured to select an air-conditioning apparatus, comprising:
an input unit configured to transmit, when information required for determining an air state of an air-conditioning target space is input, a logical condition of air of the air-conditioning target space to be achieved by the air-conditioning apparatus, and a constraint condition to be satisfied by the air-conditioning apparatus, input data to the server; and
a display unit configured to, when receiving from the server a result of selection of the air-conditioning apparatus performed by the server, display the result of selection,
wherein the information required for determining an air state of the air-conditioning target space input to the input unit includes three-dimensional information regarding the air-conditioning target space.

11. A program to be executed by a computer configured to select an air-conditioning apparatus, the program causing the computer to execute:
a storage procedure for storing information of at least one selection candidate for the air-conditioning apparatus;
an input procedure for inputting information required for determining an air state of an air-conditioning target space, a logical condition of air of the air-conditioning target space to be achieved by the air-conditioning apparatus, and a constraint condition to be satisfied by the air-conditioning apparatus; and
a selection procedure for selecting, from the at least one selection candidate for the air-conditioning apparatus stored in the storage procedure, an air-conditioning apparatus satisfying the logical condition of air and the constraint condition based on data input in the input procedure,
wherein the information required for determining an air state of an air-conditioning target space in the input procedure includes three-dimensional information regarding the air-conditioning target space.
